# EUROPEAN PATENT APPLICATION

(11) **EP 1 605 640 A1**
(43) Date of publication of application: **14.12.2005**
(21) Application number: 04291463.0
(22) Date of filing: 10.06.2004
(51) Int. Cl.: H04L 12/46

(54) **Network unit for exchanging protocol data units through tunnels**

(71) Applicant: ALCATEL, 75008 Paris (FR)
(72) Inventor: Peschi, Robert Nicolas Louis, 1200 Woluwe-Saint-Lambert (BE)
(74) Representative: Plas, Axel Ivo Michel

(57) **Abstract**

Network units (1,2,3) for exchanging protocol data units through tunnels (7,8,9) comprise detectors (11,21,31) for detecting indications in protocol data units, associators (12,22,32) for associating tunnels to the indications, and managers (13,23,33) for managing the tunnels (7,8,9). By providing the associators (12,22,32) with retrievers (41,61) for retrieving information defining known tunnels and with generators (42,62) for generating information defining new tunnels and by feeding back the manager (13,23,33) to the associator (12,22,32), the associator (12,22,32) is controlled by the management results. The known tunnels such as configured or automatic tunnels as well as new tunnels such as configured or automatic tunnels are easy to be managed, and can be used more efficiently. The managers (23,33) comprise first coders (52,72) coupled to the associators (22,32), managing units (53-56,73-76) such as policers or shapers and second coders (57,77) coupled to the managing units (53-56,73-76). The tunnels (7,8,9) comprise 6to4 tunnels, the detectors (11,21,31) detect IPv4 or IPv6 traffic, with the indications comprising addresses.

## Description

The invention relates to a network unit for exchanging protocol data units through tunnels and comprising
- a detector for detecting an indication in a protocol data unit;
- an associator for associating a tunnel to the indication; and
- a manager for managing the tunnel.

Examples of such a network unit are routers, bridges, switches, forwarders, multiplexers etc.

A prior art network unit is known from US 20040013130, which discloses an apparatus for connecting an IPv6 node/site via an IPv4 network to an other IPv6 node/site. Thereto, tunnels need to be defined. For using the defined tunnels, firstly indications (addresses) of incoming protocol data units are detected, and secondly tunnels are associated to the detected indications (addresses). Then, the protocol data units are sent through the tunnels, after being encapsulated. These tunnels need to be managed to prevent that the network units, the tunnels, the network and the nodes/sites are overloaded.

An other reason for defining and using tunnels is that tunnels allow isolated nodes/sites to form part of a virtual private network.

The tunnels may comprise configured tunnels and automatic tunnels. Configured tunnels are for example defined by fixed parameters and are for example of an unlimited duration. Their parameters and duration may be configured manually. Automatic tunnels are for example defined by flexible parameters and are for example of a limited duration. Their parameters and duration may be configured automatically.

The known network unit is disadvantageous, inter alia, owing to the fact that automatic tunnels, such as for example self-configuring tunnels or 6 to 4 tunnels, are relatively difficult to be managed. Configured tunnels are already known before they are used, automatic tunnels come and go arbitrarily.

It is an object of the invention, inter alia, to provide a network unit as defined in the preamble in which network unit the tunnels are relatively easy to be managed, even in case of these tunnels being automatic tunnels.

The network unit according to the invention is characterised in that the associator comprises
- a retriever for retrieving information defining a known tunnel; and
- a generator for generating information defining a new tunnel;
which manager is fed back to the associator.

By feeding back the manager to the associator, the associator is controlled by the management results. The management results can then be used in the associator, for example to adjust parameters of the tunnels or to adjust (extend or finish) the durations of the tunnels. The associator comprises the retriever for retrieving information defining known (configured or automatic) tunnels, and comprises the generator for generating information defining new (configured or automatic) tunnels. As a result, even the automatic tunnels are now easy to be managed, and can be used more efficiently.

US 20030070007 discloses a system for IP tunnelling through an open system interconnect network. US 6,038,233 discloses a translator for coupling IPv4 and IPv6 networks. US 20030112808 discloses an automatic configuration of IP tunnels. These documents neither disclose nor point into a direction of feeding back the manager to the associator comprising the retriever and the generator.

The exchanging of protocol data units through tunnels comprises the receiving of protocol data units at the end of a tunnel and the transmitting of protocol data units at the entrance of a tunnel and the transceiving of protocol data units via and/or between tunnels. A protocol data unit for example comprises a packet, a frame, a cell etc. An indication for example comprises an address, without excluding other indications etc.

An embodiment of the network unit according to the invention is characterised in that the network unit further comprises
- a first sender coupled to the detector for sending first protocol data units to an other network unit; and
- a second sender coupled to the detector via the manager for sending second protocol data units to an other network unit.

The first and second senders allow first and second protocol data units to be sent. The first protocol data units may be tunnelled or not, and the second protocol data units may be tunnelled or not, this depends for example on the fact whether the protocol data units leave or enter a tunnel and/or whether the protocol data units have already been encapsulated/decapsulated or not. For the first protocol data units, the manager is not involved, and for the second protocol data units, the manager is involved. A tunnelled protocol data unit is hereby defined as a protocol data unit which has already passed a specific tunnel and/or which is going to enter a specific tunnel.

An embodiment of the network unit according to the invention is characterised in that the manager comprises
- a first coder coupled to the associator;
- managing units coupled to the first coder and to the detector; and
- a second coder coupled to the managing units.

The first coder codes the information coming from the associator and defining a particular tunnel and in response selects a particular managing unit responsible for the particular tunnel. The second coder codes information coming from the particular managing unit in such a way that it can be used in the associator.

An embodiment of the network unit according to the invention is characterised in that the detector comprises an address detector, the retriever comprising a tunnel retriever, the generator comprising a tunnel generator, and the managing units comprising policers.

Policers are themselves common in the art and for example either let a protocol data unit pass or drop it. The address detector detects indications in the form of addresses.

An embodiment of the network unit according to the invention is characterised in that a first sender coupled to the address detector comprises a tunnel sender and the manager comprises a tunnel overhead remover.

This network unit receives for example tunnelled IPv6-in-IPv4 protocol data units and sends them either as for example tunnelled IPv6-in-IPv4 protocol data units (via the first sender) or as for example IPv6 protocol data units (via the second sender) to an other network unit. In this case, the network unit manages the output of a tunnel as well as the input of a destination node/site. Any further management is not to be excluded.

An embodiment of the network unit according to the invention is characterised in that the detector comprises an address detector, the retriever comprising a tunnel retriever, the generator comprising a tunnel generator, and the managing units comprising shapers.

Shapers are themselves common in the art and for example let a protocol data unit pass as long as their internal buffers can handle this. The address detector detects indications in the form of addresses.

An embodiment of the network unit according to the invention is characterised in that a second sender coupled to the address detector via the manager comprises a tunnel sender, which manager comprises a tunnel overhead adder.

This network unit receives for example IPv6 protocol data units and sends them either as for example IPv6 protocol data units (via the first sender) or as for example tunnelled IPv6-in-IPv4 protocol data units (via the second sender) to an other network unit. In this case, the network unit manages the input of a tunnel as well as the output of a source node/site. Any further management is not to be excluded.

The invention also relates to an associator for use in a network unit for exchanging protocol data units through tunnels and comprising
- a detector for detecting an indication in a protocol data unit;
- the associator for associating a tunnel to the indication; and
- a manager for managing the tunnel.

The associator according to the invention is characterised in that the associator comprises
- a retriever for retrieving information defining a known tunnel; and
- a generator for generating information defining a new tunnel; which manager is fed back to the associator.

The invention yet also relates to a manager for use in a network unit for exchanging protocol data units through tunnels and comprising
- a detector for detecting an indication in a protocol data unit;
- an associator for associating a tunnel to the indication; and
- the manager for managing the tunnel.

The manager according to the invention is characterised in that the associator comprises
- a retriever for retrieving information defining a known tunnel; and
- a generator for generating information defining a new tunnel; which manager is fed back to the associator.

The invention further relates to a method for exchanging protocol data units through tunnels and comprising the steps of
- detecting an indication in a protocol data unit;
- associating a tunnel to the indication; and
- managing the tunnel.

The method according to the invention is characterised in that the step of associating comprises the substeps of
- retrieving information defining a known tunnel; and
- generating information defining a new tunnel;
   which managing is fed back to the associating.

The invention yet further relates to a processor program product for exchanging protocol data units through tunnels and comprising the functions of
- detecting an indication in a protocol data unit;
- associating a tunnel to the indication; and
- managing the tunnel.

The processor program product according to the invention is characterised in that the function of associating comprises the subfunctions of
- retrieving information defining a known tunnel; and
- generating information defining a new tunnel;
which managing is fed back to the associating.

Embodiments of the associator according to the invention and of the manager according to the invention and of the method according to the invention and of the processor program product according to the invention correspond with the embodiments of the network unit according to the invention.

The invention is based upon an insight, inter alia, that configured tunnels are already known before they are used, contrary to automatic tunnels, and is based upon a basic idea, inter alia, that the manager is to be fed back to the associator.

The invention solves the problem, inter alia, to provide a network unit in which network unit the tunnels are relatively easy to be managed, even in case of these tunnels being automatic tunnels, and is advantageous, inter alia, in that tunnels can be used more efficiently.

These and other aspects of the invention will be apparent from and elucidated with reference to the embodiments(s) described hereinafter.
Fig. 1 shows diagrammatically networks and network-units according to the invention;
Fig. 2 shows diagrammatically a general network unit according to the invention;
Fig. 3 shows diagrammatically a network unit according to the invention for receiving IPv6 protocol data units and sending them either as IPv6 protocol data units or as tunnelled IPv6-in-IPv4 protocol data units to an other network unit; and
Fig. 4 shows diagrammatically a network unit according to the invention for receiving tunnelled IPv6-in-IPv4 protocol data units and sending them either as tunnelled IPv6-in-IPv4 protocol data units or as IPv6 protocol data units to an other network unit.

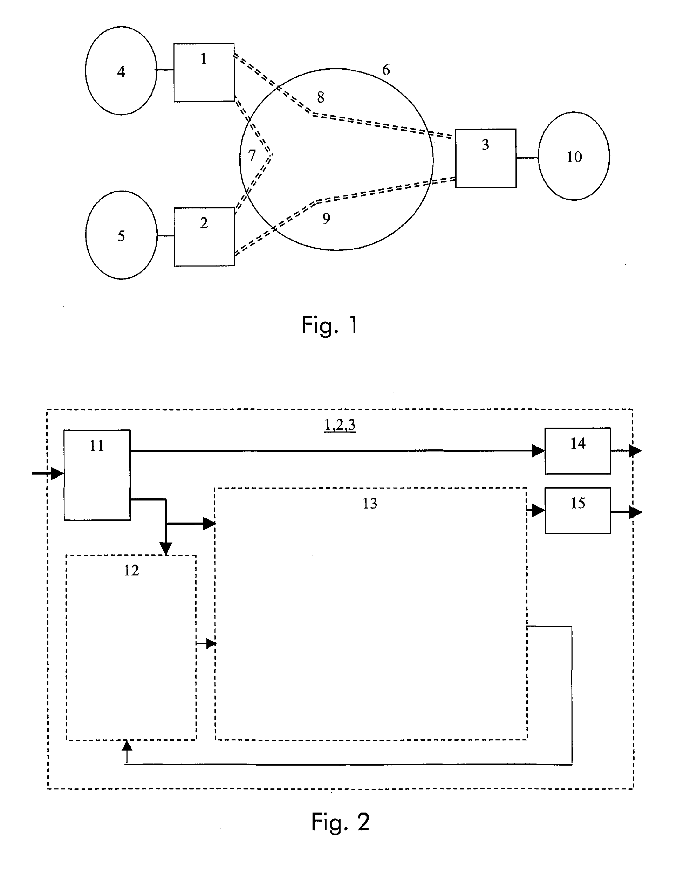

The networks and network-units shown in Fig. 1 disclose a (for example IPv4) network 6 and three (for example IPv6) networks 4,5,10 and three network units 1,2,3 according to the invention. The network unit 1 is coupled to the network 4, the network unit 2 is coupled to the network 5, and the network unit 3 is coupled to the network 10. Between the network units 1 and 2, a (for example 6 to 4) tunnel 7 is present, between the network units 1 and 3, a (for example 6 to 4) tunnel 8 is present, and between the network units 2 and 3, a (for example 6 to 4) tunnel 9 is present. All tunnels 7,8,9 go through the network 6.

The general network unit 1,2,3 according to the invention shown in Fig. 2 comprises a detector 11 for detecting indications in protocol data units, an associator 12 coupled to the detector 11 for associating tunnels 7,8,9 to the indications, and a manager 13 coupled to the detector 11 for managing the tunnels 7,8,9. The network unit 1,2,3 further comprises a first sender 14 coupled to the detector 11 for sending first protocol data units to an other network unit, and a second sender 15 coupled to the detector 11 via the manager 13 for sending second protocol data units to an other network unit. The first protocol data units may be tunnelled or not, and the second protocol data units may be tunnelled or not, this depends for example on the fact whether the protocol data units leave or enter a tunnel and/or whether the protocol data units have already been encapsulated/decapsulated or not. For the first protocol data units, the manager is not involved, and for the second protocol data units, the manager is involved. A tunnelled protocol data unit is defined as a protocol data unit which has already passed a specific tunnel and/or which is going to enter a specific tunnel.

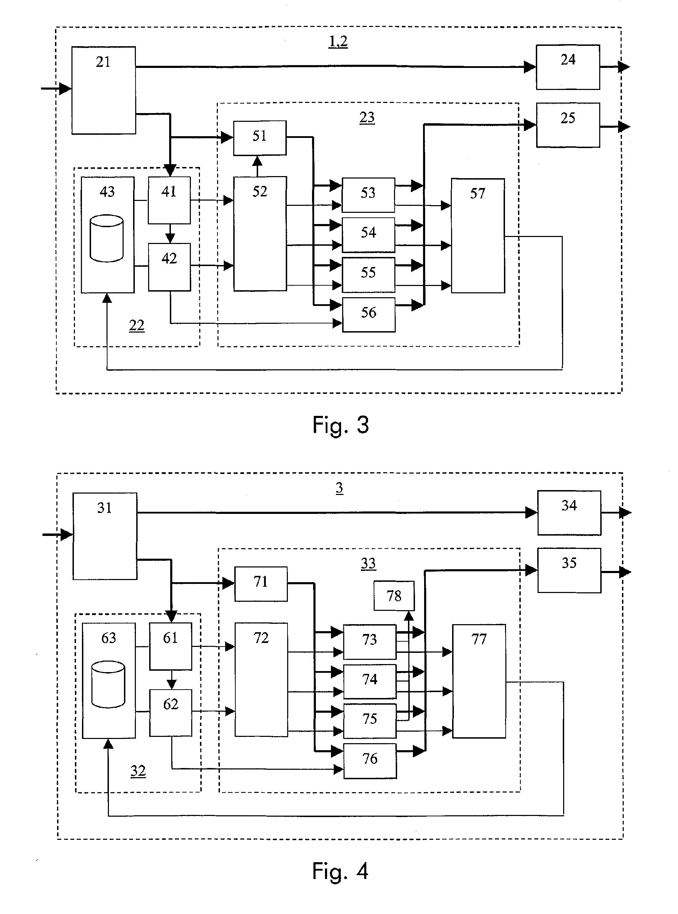

The tunnels 7,8,9 may comprise configured tunnels and automatic tunnels. Configured tunnels are for example defined by fixed parameters and are for example of an unlimited duration. Their parameters and duration may be configured manually. Automatic tunnels are for example defined by flexible parameters and are for example of a limited duration. Their parameters and duration may be configured automatically. Automatic tunnels, such as for example self-configuring tunnels or 6 to 4 tunnels, are difficult to be managed. Configured tunnels are already known before they are used, automatic tunnels come and go arbitrarily. To simplify and thus improve the tunnel management, the associator 12 is provided with a retriever 41,61 shown in Fig. 3,4 for retrieving information defining a known (configured or automatic) tunnel, and with a generator 42,62 shown in Fig. 3,4 for generating information defining a new (configured or automatic) tunnel, whereby the manager 13 is fed back to the associator 12.

By feeding back the manager 13 to the associator 12, the associator 12 is controlled by the management results. The management results can then be used in the associator 12, for example to adjust parameters of the tunnels or to adjust (extend or finish) the durations of the tunnels. As a result, the tunnels are easy to be managed, even in case of these tunnels being automatic tunnels, and can be used more efficiently. The exchanging of protocol data units through tunnels comprises the receiving of protocol data units at the end of a tunnel and the transmitting of protocol data units at the entrance of a tunnel and the transceiving of protocol data units via and/or between tunnels. A protocol data unit for example comprises a packet, a frame, a cell etc. An indication for example comprises an address, without excluding other indications etc.

The network unit 1,2 according to the invention shown in Fig. 3 for receiving for example IPv6 protocol data units and sending them either as for example IPv6 protocol data units or as for example tunnelled IPv6-in-IPv4 protocol data units to an other network unit comprises an address detector 21 for detecting IPv6 addresses (more general: indications) in protocol data units, an associator 22 coupled to the address detector 21 for associating tunnels 7,8,9 to the addresses, and a manager 23 coupled to the address detector 21 for managing the tunnels 7,8,9. The network unit 1,2 further comprises a first sender 24 coupled to the address detector 21 for sending first protocol data units to an other network unit, which first protocol data units form part of for example IPv6 traffic, and a second sender 25 coupled to the address detector 21 via the manager 23 for sending tunnelled protocol data units to an other network unit, which second protocol data units form part of for example IPv6-in-IPv4 traffic. Thereto, the associator 22 comprises a tunnel retriever 41 for retrieving information defining a known (configured or automatic) tunnel, a tunnel generator 42 for generating information defining a new (configured or automatic) tunnel, and a memory 43 coupled to the tunnel retriever 41 and the tunnel generator 42.

The manager 23 comprises a first coder 52 coupled to the tunnel retriever 41 and to the tunnel generator 42, managing units 53-55 coupled to the first coder 52 and to the address detector 21 via a tunnel overhead adder 51, a default managing unit 56 coupled to the tunnel generator 42 and to the address detector 21, and a second coder 57 coupled to the managing units 53-55. The managing units 53-56 are further coupled to the second sender 25, and the second coder 57 is further coupled to (fed back to) the memory 43. An automatic tunnel comprises for example a 6 to 4 tunnel, the address detector 21 comprises for example an IPv6 detector, the tunnel retriever 41 comprises for example a 6 to 4 tunnel retriever, the tunnel generator 42 comprises for example a 6 to 4 tunnel generator, and the managing units 53-56 comprise shapers. The first sender 24 coupled to the address detector 21 comprises for example an IPv6 sender and the second sender 25 coupled to the address detector 21 via the manager 23 comprising the tunnel overhead adder 51 comprises for example an IPv4 sender (tunnel sender). The manager 23 manages the inputs of the tunnels 7,8,9 and the outputs of the networks 4,5.

The operation of the network unit 1,2 according to the invention shown in Fig. 3 is as follows. For example IPv6 protocol data units arrive at the detector 21, which detects whether these IPv6 protocol data units are to be forwarded via a tunnel (such as for example a 6 to 4 tunnel) or not. In case of these IPv6 protocol data units not needing to be tunnelled, they are supplied to the first sender 24. In case of these IPv6 protocol data units needing to be tunnelled (for example via the 6 to 4 tunnel), they are supplied to the tunnel retriever 41 and via the tunnel overhead adder 51 to the managing units 53-56. The tunnel overhead adder converts the IPv6 protocol data unit into an IPv4 protocol data unit or encapsulates the IPv6 protocol data unit in an IPv4 protocol data unit.

In case of the IPv6 address already being associated with (the management of) a tunnel, the tunnel retriever 41 is informed through the memory 43 and information defining the known tunnel (configured or automatic) is supplied from the tunnel retriever 41 to the first coder 52. In response, one of the managing units 53-55 (shapers) is selected to shape the IPv6-in-IPv4 protocol data unit, in other words, the protocol data unit is buffered and a little later read out as long as the buffer is not overloaded and then supplied to the second sender 25. The selected managing unit 53-55 further informs the second coder 57, which in response may inform the memory 43.

In case of the IPv6 address not already being associated with (the management of) a tunnel, the tunnel retriever 41 is informed through the memory 43 and the tunnel generator 42 is activated, which tunnel generator 42, possibly via the memory 43, generates information defining a new (configured or automatic) tunnel. This information is supplied from the tunnel generator 42 to the first coder 52. In response, one of the managing units 53-55 (shapers) is selected to shape the IPv6-in-IPv4 protocol data unit, in other words, the protocol data unit is buffered and a little later read out as long as the buffer is not overloaded and then supplied to the second sender 25. The selected managing unit 53-55 further informs the second coder 57, which in response may inform the memory 43.

Otherwise, in case (the management of) a new tunnel cannot be created at the moment, the tunnel generator 42, possibly via the memory 43, generates default information. This default information is supplied from the tunnel generator 42 to the managing unit 56, which managing unit 56 (shaper) is selected to shape the IPv6-in-IPv4 protocol data unit, in other words, the protocol data unit is buffered and a little later read out as long as the buffer is not overloaded and then supplied to the second sender 25. The selected managing unit 56 further informs the second coder 57, which in response may inform the memory 43.

This way, the tunnels 7,8,9 are managed efficiently and simply, even in case of one or more of these tunnels being automatic tunnels. In case of one or more of these tunnels being overloaded, the managing units 53-56 will find out about this, and inform the second coder 57. Through the feedback loop, the memory 43 is to be adapted correspondingly. Also, in case of one or more of these tunnels being no more in use, the managing units 53-55 will find out about this, and inform the second coder 57. Through the feedback loop, the memory 43 is to be adapted correspondingly.

Of course, in case of the tunnel overhead adder 51 needing to add individual IPv4 overhead per tunnel, the tunnel overhead adder 51 is to be informed via a coupling for example present between the first coder 52 and the tunnel overhead adder 51 or via a coupling not shown and for example present between the associator 22 and the tunnel overhead adder 51.

The network unit 3 according to the invention shown in Fig. 4 for receiving for example tunnelled IPv6-in-IPv4 protocol data units and sending them either as for example tunnelled IPv6-in-IPv4 protocol data units or as for example IPv6 protocol data units to an other network unit comprises an address detector 31 for detecting IPv4 addresses (more general: indications) in protocol data units, an associator 32 coupled to the address detector 31 for associating tunnels 8,9 to the addresses, and a manager 33 coupled to the address detector 31 for managing the tunnels 8,9. The network unit 3 further comprises a first sender 34 coupled to the address detector 31 for sending first protocol data units to an other network unit, which first protocol data units form part of for example IPv6-in-IPv4 traffic, and a second sender 35 coupled to the address detector 31 via the manager 33 for sending second protocol data units to an other network unit, which second protocol data units form part of for example IPv6 traffic. Thereto, the associator 32 comprises a tunnel retriever 61 for retrieving information defining a known (configured or automatic) tunnel, a tunnel generator 62 for generating information defining a new (configured or automatic) tunnel, and a memory 63 coupled to the tunnel retriever 61 and the tunnel generator 62.

The manager 33 comprises a first coder 72 coupled to the tunnel retriever 61 and to the tunnel generator 62, managing units 73-75 coupled to the first coder 72 and to the address detector 31 via a tunnel overhead remover 71, a default managing unit 76 coupled to the tunnel generator 62 and to the address detector 31, and a second coder 77 coupled to the managing units 73-75. The managing units 73-76 are further coupled to the second sender 35 and to a dropping unit 78, and the second coder 77 is further coupled to (fed back to) the memory 63. An automatic tunnel comprises for example a 6 to 4 tunnel, the address detector 31 comprises for example an IPv4 detector, the tunnel retriever 61 comprises for example a 6 to 4 tunnel retriever, the tunnel generator 62 comprises for example a 6 to 4 tunnel generator, and the managing units 73-76 comprise policers. The first sender 34 coupled to the address detector 31 comprises for example an IPv4 sender (tunnel sender) and the second sender 35 coupled to the address detector 31 via the manager 33 comprising the tunnel overhead remover 71 comprises for example an IPv6 sender. The manager 33 manages the outputs of the tunnels 8,9 and the inputs of the network 10.

The operation of the network unit 3 according to the invention shown in Fig. 4 is as follows. For example IPv6-in-IPv4 protocol data units arrive at the address detector 31, which detects whether these IPv6-in-IPv4 protocol data units are to be forwarded via a tunnel (such as for example a 6 to 4 tunnel) or not. In case of these IPvb-in-IPv4 protocol data units still needing to be tunnelled, they are supplied to the first sender 34. In case of these IPv6-in-IPv4 protocol data units no longer needing to be tunnelled, they are supplied to the tunnel retriever 61 and via the tunnel overhead remover 71 to the managing units 73-76. The tunnel overhead remover 71 converts the IPv6-in-IPv4 protocol data unit into an IPv6 protocol data unit or decapsulates an IPv6 protocol data unit from the IPv4 protocol data unit.

In case of the IPv4 address already being associated with (the management of) a tunnel (the IPv6-in-IPv4 protocol data units arrive via a tunnel which is already managed by the network unit 3), the tunnel retriever 61 is informed through the memory 63 and information defining the known tunnel (configured or automatic) is supplied from the tunnel retriever 61 to the first coder 72. In response, one of the managing units 73-75 (policers) is selected to police the IPv6 protocol data unit, in other words, the protocol data unit is buffered and a little later read out as long as the buffer is not overloaded and then supplied to the second sender 35, or the protocol data unit is dropped via dropping unit 78. The selected managing unit 73-75 further informs the second coder 77, which in response may inform the memory 63.

In case of the IPv4 address not already being associated with (the management of) a tunnel (the IPv6-in-IPv4 protocol data units arrive via a tunnel which is not yet managed by the network unit 3), the tunnel retriever 61 is informed through the memory 63 and the tunnel generator 62 is activated, which tunnel generator 62, possibly via the memory 63, generates information defining a new (configured or automatic) tunnel. This information is supplied from the tunnel generator 62 to the first coder 72. In response, one of the managing units 73-75 (policers) is selected to police the IPv6 protocol data unit, in other words, the protocol data unit is buffered and a little later read out as long as the buffer is not overloaded and then supplied to the second sender 35, or the protocol data unit is dropped via the dropping unit 78. The selected managing unit 73-75 further informs the second coder 77, which in response may inform the memory 63.

Otherwise, in case (the management of) a new tunnel cannot be created at the moment (the IPv6-in-IPv4 protocol data units arrive via a tunnel which is not yet managed by the network unit 3 and which can at the moment not be managed individually by the network unit 3), the tunnel generator 62, possibly via the memory 63, generates default information. This default information is supplied from the tunnel generator 62 to the managing unit 76, which managing unit 76 (policer) is selected to shape the IPv6 protocol data unit, in other words, the protocol data unit is buffered and a little later read out as long as the buffer is not overloaded and then supplied to the second sender 35, or the protocol data unit is dropped via the dropping unit 78. The selected managing unit 76 further informs the second coder 77, which in response may inform the memory 63.

This way, the tunnels 8,9 are managed efficiently and simply, even in case of one or more of these tunnels being automatic tunnels. In case of one or more of these tunnels being overloaded, the managing units 73-76 will find out about this, and inform the second coder 77. Through the feedback loop, the memory 63 is to be adapted correspondingly. Also, in case of one or more of these tunnels being no more in use, the managing units 73-75 will find out about this, and inform the second coder 77. Through the feedback loop, the memory 63 is to be adapted correspondingly.

Of course, in case of the tunnel overhead remover 71 needing to remove individual IPv4 overhead per tunnel, the tunnel overhead remover 71 is to be informed via a coupling for example present between the first coder 72 and the tunnel overhead remover 71 or via a coupling not shown and for example present between the associator 32 and the tunnel overhead remover 71.

Instead of IPv4 and IPv6 networks and 6 to 4 tunnels, other networks and tunnels may be present, for example to convert several isolated networks into one virtual private network. In the Figures, further (parts of) network units may be present, for example, for forwarding, switching, routing, multiplexing or bridging with or without tunnelling etc. In Fig. 2-4, separate blocks may be combined and/or integrated into a larger block and/or may be divided into smaller subblocks, without departing from the scope of this invention.

The expression "for" in for example "for exchanging", "for detecting", "for associating", "for managing", "for retrieving", "for generating" etc. does not exclude that other functions are performed as well, simultaneously or not. The expressions "X coupled to Y" and "a coupling between X and Y" and "coupling/couples X and Y" etc. do not exclude that an element Z is in between X and Y. The expressions "P comprises Q" and "P comprising Q" etc. do not exclude that an element R is comprised/included as well. The terms "a" and "an" do not exclude the possible presence of one or more pluralities.

The steps/functions of detecting, associating, managing, retrieving, generating and feeding back do not exclude further steps/functions, like for example the steps/functions described for the Figures.

## Claims

1. Network unit (1,2,3) for exchanging protocol data units through tunnels (7,8,9) and comprising
- a detector (11,21,31) for detecting an indication in a protocol data unit;
- an associator (12,22,32) for associating a tunnel (7,8,9) to the indication; and
- a manager (13,23,33) for managing the tunnel (7,8,9);
**CHARACTERISED IN THAT** the associator (12,22,32) comprises
- a retriever (41,61) for retrieving information defining a known tunnel; and
- a generator (42,62) for generating information defining a new tunnel; which manager (13,23,33) is fed back to the associator (12,22,32).

2. Network unit (1,2,3) as defined in claim 1,
**CHARACTERISED IN THAT** the network unit (1,2,3) further comprises
- a first sender (14,24,34) coupled to the detector (11,21,31) for sending first protocol data units to an other network unit; and
- a second sender (15,25,35) coupled to the detector (11,21,31) via the manager (13,23,33) for sending second protocol data units to an other network unit.

3. Network unit (1,2,3) as defined in claim 1,
**CHARACTERISED IN THAT** the manager (23,33) comprises
- a first coder (52,72) coupled to the associator (22,32);
- managing units (53-56,73-76) coupled to the first coder (52,72) and to the detector (21,31); and
- a second coder (57,77) coupled to the managing units (53-56,73-76).

4. Network unit (3) as defined in claim 3,
**CHARACTERISED IN THAT** the detector comprises an address detector (31), the retriever comprising a tunnel retriever (61), the generator comprising a tunnel generator (62), and the managing units (73-76) comprising policers.

5. Network unit (3) as defined in claim 4,
**CHARACTERISED IN THAT** a first sender coupled to the address detector (31) comprises a tunnel sender (34) and the manager (33) comprises a tunnel overhead remover (71).

6. Network unit (1,2) as defined in claim 3,
**CHARACTERISED IN THAT** the detector comprises an address detector (21), the retriever comprising a tunnel retriever (41), the generator comprising a tunnel generator (42), and the managing units (53-56) comprising shapers.

7. Network unit (1,2) as defined in claim 6,
**CHARACTERISED IN THAT** a second sender coupled to the address detector (21) via the manager (23) comprises a tunnel sender (25), which manager (23) comprises a tunnel overhead adder (51).

8. Associator (12,22,32) for use in a network unit (1,2,3) for exchanging protocol data units through tunnels (7,8,9) and comprising
- a detector (11,21,31) for detecting an indication in a protocol data unit;
- the associator (12,22,32) for associating a tunnel (7,8,9) to the indication; and
- a manager (13,23,33) for managing the tunnel (7,8,9);
**CHARACTERISED IN THAT** the associator (12,22,32) comprises
- a retriever (41,61) for retrieving information defining a known tunnel; and
- a generator (42,62) for generating information defining a new tunnel; which manager (13,23,33) is fed back to the associator (12,22,32).

9. Manager (13,23,33) for use in a network unit (1,2,3) for exchanging protocol data units through tunnels (7,8,9) and comprising
- a detector (11,21,31) for detecting an indication in a protocol data unit;
- an associator (12,22,32) for associating a tunnel (7,8,9) to the indication; and
- the manager (13,23,33) for managing the tunnel (7,8,9);
**CHARACTERISED IN THAT** the associator (12,22,32) comprises
- a retriever (41,61) for retrieving information defining a known tunnel; and
- a generator (42,62) for generating information defining a new tunnel; which manager (13,23,33) is fed back to the associator (12,22,32).

10. Method for exchanging protocol data units through tunnels (7,8,9) and comprising the steps of
- detecting an indication in a protocol data unit;
- associating a tunnel (7,8,9) to the indication; and
- managing the tunnel (7,8,9);
**CHARACTERISED IN THAT** the step of associating comprises the substeps of
- retrieving information defining a known tunnel; and
- generating information defining a new tunnel;
which managing is fed back to the associating.

11. Processor program product for exchanging protocol data units through tunnels (7,8,9) and comprising the functions of
- detecting an indication in a protocol data unit;
- associating a tunnel (7,8,9) to the indication; and
- managing the tunnel (7,8,9);
**CHARACTERISED IN THAT** the function of associating comprises the subfunctions of
- retrieving information defining a known tunnel; and
- generating information defining a new tunnel;
which managing is fed back to the associating.
